# FASCICULE DE BREVET EUROPEEN

(11) **EP 2 417 338 B1**
(45) Date de publication et mention de la délivrance du brevet: **17.07.2013**
(21) Numéro de dépôt: 10723239.9
(22) Date de dépôt: 09.04.2010
(51) Int. Cl.: F01P 7/16, B60K 1/00, B60K 11/02, B60L 11/18

(54) **DISPOSITIF DE REFROIDISSEMENT POUR VÉHICULE AUTOMOBILE**
KÜHLVORRICHTUNG FÜR EIN KRAFTFAHRZEUG
COOLING DEVICE FOR A MOTOR VEHICLE

(30) Priorité: 09.04.2009 FR 0952363
(43) Date de publication de la demande: 15.02.2012
(73) Titulaire: Renault S.A.S., 92100 Boulogne-Billancourt (FR)
(72) Inventeur: CREGUT, Samuel, F-78470 Saint-Remy-les-Chevreuse (FR); OBERTI, Claire, F-75014 Paris (FR); MARSILIA, Marco, F-92100 Boulogne Billancourt (FR)
(86) Numéro de dépôt international: PCT/FR2010/050689
(87) Numéro de publication internationale: WO 2010/116106

(56) Documents cités:
- EP-A- 0 323 211
- EP-A- 1 308 610
- EP-A- 1 965 489
- EP-A- 2 045 452
- DE-A1- 3 024 209
- DE-A1- 19 542 125
- FR-A- 2 808 304
- US-A1- 2008 060 589

## Description

L'invention a pour objet un dispositif de refroidissement pour véhicule automobile du type électrique, comprenant un circuit de refroidissement apte à refroidir un ensemble moteur à l'aide d'un liquide de refroidissement. L'invention s'applique avantageusement aux véhicules automobiles électriques.

Dans un moteur à combustion interne, les combustions répétées surchauffent les pièces en contact, comme par exemple les pistons, les cylindres, et les soupapes, et se diffusent sur l'ensemble des pièces mécaniques du moteur. Il faut donc les refroidir sous peine de destruction. Pour un bon fonctionnement, les moteurs à explosion ont ainsi besoin d'une température régulière et adaptée.

Dans le cas d'un véhicule à propulsion électrique, il est également nécessaire de refroidir les différents éléments de la chaîne de traction.

Il est connu d'utiliser un système de refroidissement comprenant une ou plusieurs pompes permettant de faire circuler un liquide de refroidissement à travers le moteur, ainsi qu'un radiateur, qui est un échangeur de température permettant de refroidir le liquide.

Après l'arrêt et le verrouillage du véhicule par le conducteur, lorsque le véhicule est en fin de mission, le dispositif de refroidissement est classiquement mis à l'état de veille, c'est-à-dire dans un état hors tension, afin de ne pas consommer inutilement l'énergie électrique de la batterie.

Toutefois, dans certains cas, le refroidissement de l'ensemble moteur peut être souhaitable après l'arrêt du véhicule, ce que ne permettent pas d'assurer les dispositifs de refroidissement classiques.

DE 19542125 A divulgue un dispositif selon le préambule de la revendication 1.

L'invention vise à remédier à ces inconvénients.

L'invention a ainsi pour objet un dispositif de refroidissement pour véhicule automobile du type électrique selon la revendication 1, le dispositif de refroidissement pouvant être sous tension ou hors tension et comprenant un circuit de refroidissement apte à refroidir un ensemble moteur comprenant un système électronique de pilotage à l'aide d'un liquide de refroidissement, le circuit de refroidissement étant commandé par un système de commande apte à maintenir le dispositif sous tension lorsque le véhicule est en fin de mission et que la température du liquide de refroidissement est supérieure à une température seuil.

Conformément au dispositif selon l'invention, le véhicule électrique comprend un ensemble chargeur de batterie, et le circuit de refroidissement est apte à refroidir l'ensemble chargeur et l'ensemble moteur.

Par « véhicule en fin de mission » au sens de l'invention, on entend que le véhicule est à l'arrêt et qu'il est verrouillé. Les calculateurs du véhicule sont alors mis hors tension.

Le dispositif comprend une première pompe apte à alimenter sélectivement en liquide de refroidissement l'ensemble moteur et une deuxième pompe apte à alimenter sélectivement en liquide de refroidissement l'ensemble chargeur. Ainsi, grâce à l'invention, il est possible d'empêcher la mise hors tension du dispositif de refroidissement à la fin de la mission du véhicule, lorsque le refroidissement du moteur n'est pas suffisant.

A cet effet, le dispositif peut comprendre une première vanne apte à empêcher un passage de liquide de refroidissement dans l'ensemble chargeur et une deuxième vanne apte à empêcher un passage de liquide de refroidissement dans l'ensemble moteur.

Le dispositif peut également comprendre une restriction hydraulique permettant de maintenir un débit minimum de liquide de refroidissement dans l'ensemble moteur.

Le système de commande est avantageusement apte à asservir le débit de chaque pompe dans un système de régulation en boucle fermée en fonction de la température du liquide de refroidissement et d'une température de consigne. Ainsi, l'asservissement du débit de chaque pompe en boucle fermée permet de limiter son usure et sa consommation d'énergie.

Le système de commande est avantageusement apte à stopper le maintien du dispositif sous tension, c'est-à-dire qu'il est apte à le mettre hors tension, si la tension de la batterie est inférieure à une valeur de consigne, de manière à ne pas trop décharger la batterie.

Le système de commande est avantageusement apte à stopper le maintien du dispositif sous tension, c'est-à-dire qu'il est apte à le mettre hors tension, si le temps écoulé depuis l'arrêt du véhicule, en particulier depuis la fin de mission du véhicule, dépasse un intervalle de temps prédéterminé, de manière à ne pas continuer à refroidir indéfiniment, même si la température du liquide de refroidissement est trop élevée.

L'intervalle de temps prédéterminé peut être fonction de la température à l'extérieur du véhicule.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 illustre sous forme de schéma-blocs un dispositif de refroidissement selon l'invention, intégré à un véhicule électrique,
- la figure 2 illustre sous forme de schéma-blocs une stratégie de commande du dispositif, et
- la figure 3 est une vue de détail d'un bloc de la figure 2.

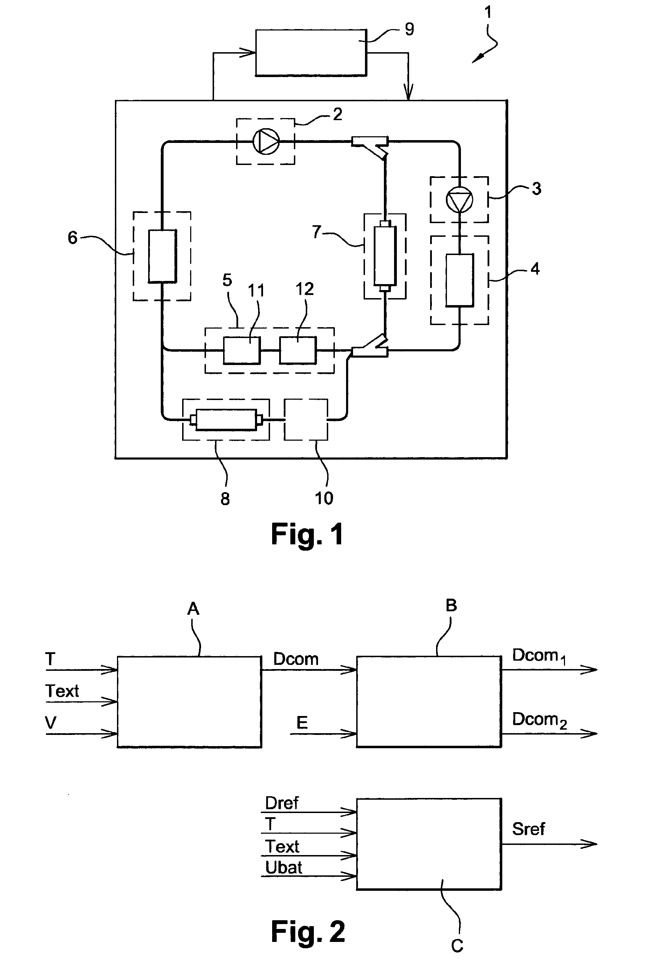

Le véhicule tel qu'illustré à la figure 1, comprend une première pompe électrique 2, une deuxième pompe électrique 3, un chargeur 4 de batterie, un ensemble moteur 5, un radiateur 6, ainsi qu'une première électrovanne 7 et de préférence une deuxième électrovanne 8. La première pompe électrique 2, la deuxième pompe électrique 3, la première électrovanne 7 et la deuxième électrovanne 8 sont reliées à un dispositif de commande 9.

La première pompe électrique 2 est destinée à être utilisée lors du roulage du véhicule, tandis que la deuxième pompe électrique 3 est destinée à être utilisée lors de la recharge de la batterie. Le débit de la première pompe 2 et le débit de la deuxième pompe 3 peuvent être réglés à l'aide d'un signal de commande.

Le chargeur 4 permet, lorsque le véhicule est à l'arrêt, de recharger la batterie électrique de traction, non représentée, à partir du réseau électrique domestique.

La première électrovanne 7 permet de court-circuiter la deuxième pompe 3 et le chargeur 4, lors du roulage du véhicule, tandis que la deuxième électrovanne 8 permet de court-circuiter l'ensemble moteur 5 lors du chargement de la batterie, lorsqu'on estime que le refroidissement de l'ensemble moteur 5 n'est pas nécessaire. La deuxième électrovanne 8 peut être reliée à une restriction hydraulique 10 qui permet de réaliser une perte de charge, et de conserver ainsi un débit de liquide de refroidissement dans l'ensemble moteur 5, même lorsque la deuxième électrovanne 8 est passante.

L'ensemble moteur 5 comprend un moteur 11 et un système électronique de pilotage 12 destiné notamment à transformer la tension continue de la batterie en tension alternative.

Le radiateur 6 permet de refroidir le liquide de refroidissement, de manière similaire au dispositif de refroidissement d'un moteur à combustion interne. Il est équipé d'un moto-ventilateur, non représenté.

Il est nécessaire de refroidir l'ensemble moteur 5 lors du roulage du véhicule, ainsi que le chargeur 4 lorsque le véhicule est à l'arrêt. La stratégie de refroidissement est gérée par le dispositif de commande 9. Le dispositif de commande 9 est un calculateur qui est en liaison avec des capteurs du circuit de refroidissement, en particulier des capteurs de température du liquide de refroidissement. Le calculateur 9 pilote en outre les pompes 2,3, les électrovannes 7,8, ainsi que le groupe moto-ventilateur du radiateur 6. Le calculateur 9 est en outre avantageusement relié à d'autres calculateurs du véhicule, via un réseau de type bus CAN (Controller Area Network) par exemple, afin d'obtenir d'autres mesures nécessaires à la stratégie de refroidissement.

La stratégie de commande du circuit de refroidissement peut être réalisée sous la forme de trois modules A, B, C, tel qu'illustré à la figure 2. Le module A concerne la régulation de la température du liquide de refroidissement. Le module B concerne le choix de la pompe électrique 2,3. Le module C concerne quant à lui l'empêchement de la mise hors tension du dispositif 1.

Le module A est chargé d'élaborer une commande de débit de liquide de refroidissement selon l'état du véhicule (roulage ou recharge de la batterie à l'arrêt). Les entrées du module A sont :
- la température T du liquide de refroidissement : elle peut être obtenue à l'aide d'un ou plusieurs capteurs de température,
- la température Tₑₓₜ à l'extérieur du véhicule, et
- la vitesse V du véhicule.

Les entrées du module B sont :
- la commande de débit D_{com} issue du module A, et
- l'état E du véhicule : c'est un signal en provenance du calculateur central de la voiture qui vaut 1 si on est en mode recharge de la batterie du véhicule et qui vaut 0 si on est en mode roulage.

Les sorties du module B sont :
- la commande du débit D_{com1} de la première pompe, utilisée en mode roulage. Il s'agit d'un signal compris entre 0 et 100 et exprimant le pourcentage du débit maximum pouvant être réalisé par la pompe, et
- la commande du débit D_{com2} de la deuxième pompe, utilisée en mode recharge. Il s'agit d'un signal compris entre 0 et 100 et exprimant le pourcentage du débit maximum pouvant être réalisé par la pompe.

De manière simple, on peut choisir de n'utiliser que la deuxième pompe si le signal de l'état du véhicule vaut 1 et de n'utiliser que la première pompe si le signal de l'état du véhicule vaut 0.

L'objectif du module B est de faire varier automatiquement la commande de débit entre une valeur minimum de débit Dₘᵢₙ et une valeur maximum de débit Dₘₐₓ, en fonction de la température du liquide de refroidissement. Tant que la température du liquide de refroidissement est inférieure à une température de consigne, la commande de débit reste à la valeur minimale Dₘᵢₙ. Dès que la température du liquide de refroidissement dépasse la température de consigne, la commande de débit est obtenue par régulation en boucle fermée, la consigne considérée étant la température de consigne, et la boucle de réaction considérée étant la température mesurée du liquide de refroidissement.

Les entrées du module C sont :
- la demande de refroidissement D_{ref} du véhicule : il s'agit d'un signal logique en provenance du calculateur central du véhicule et qui indique s'il est nécessaire de refroidir les organes électrotechniques du véhicule, en roulage ou en recharge batterie. Si le signal vaut 1, le refroidissement est nécessaire, sinon il vaut 0.
- la température T du liquide de refroidissement : elle peut être obtenue à l'aide d'un ou plusieurs capteurs de température,
- la température Tₑₓₜ à l'extérieur du véhicule, et
- la tension de la batterie U_{bat}.

Le module C élabore en sortie un signal de refroidissement S_{ref} qui vaut 1 si le dispositif de refroidissement peut être arrêté, c'est-à-dire que les pompes peuvent être coupées et mises hors tension, ou qui vaut 0 si la mise hors tension n'est pas autorisée, et que les organes électrotechniques du véhicule doivent continuer à être refroidis.

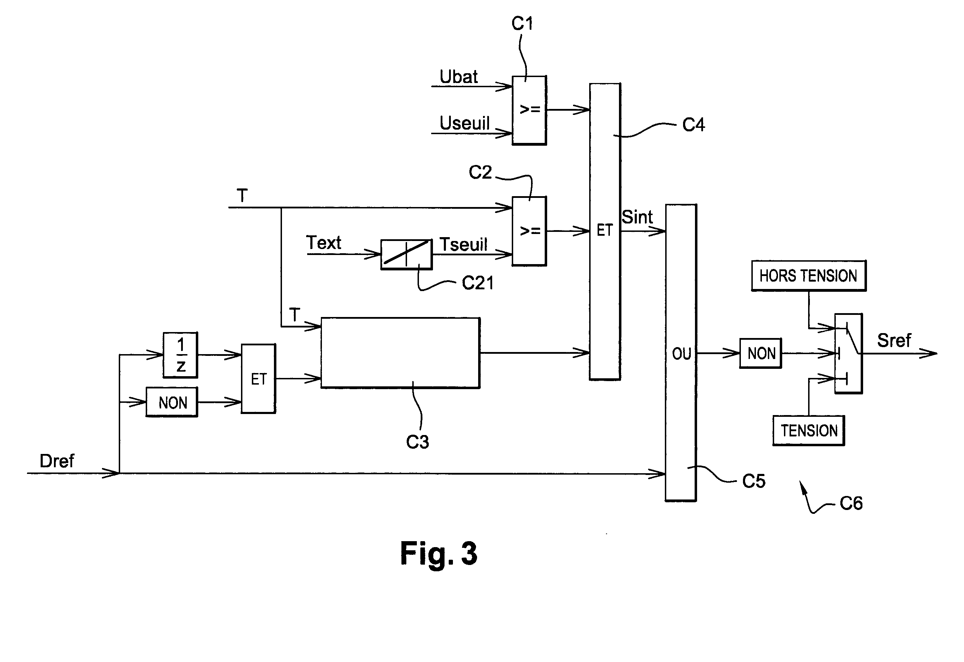

Un mode de réalisation possible du module C est illustré à la figure 3. Dans ce mode de réalisation, on souhaite interdire la mise en veille du système de refroidissement lorsque la température du liquide de refroidissement est supérieure à une valeur seuil, et ce sous deux conditions. D'une part, on ne veut pas continuer à refroidir si la tension de la batterie est inférieure à une valeur seuil. En effet, si la tension de la batterie est trop faible, on risque d'avoir une panne immobilisant le véhicule. D'autre part, on ne veut pas continuer à refroidir indéfiniment si la température de refroidissement reste supérieure au seuil de température. On limite donc la durée de refroidissement après l'arrêt du véhicule, en particulier lors de la fin de mission du véhicule, à une durée maximum. Cette durée peut dépendre de la température du liquide de refroidissement au moment de l'arrêt du véhicule ou de la fin de mission. Plus cette température est élevée et plus la durée maximum est élevée.

Le module C comprend trois blocs condition C1, C2 et C3, deux blocs porte logique C4 et C5, ainsi qu'un bloc de sortie C6.

Le signal d'interdiction Sᵢₙₜ de mise en veille du dispositif est obtenu lorsque le signal du bloc C4 est VRAI, c'est-à-dire lorsque les trois conditions C1 à C3 sont vérifiées.

La condition C1 est vérifiée si la tension U_{bat} de la batterie est supérieure à une tension seuil Uₛₑᵤᵢₗ, par exemple 10,7 V pour une batterie de 14V.

La condition C2 est vérifiée si la température T du liquide de refroidissement est supérieure à une température seuil Tₛₑᵤᵢₗ. Cette température seuil Tₛₑᵤᵢₗ peut être prédéterminée en fonction d'une cartographie C21 de valeurs de températures seuil en fonction de la température Tₑₓₜ à l'extérieur du véhicule. En effet, plus la température extérieure Tₑₓₜ est faible et plus on peut autoriser une mise en veille pour des températures élevées, car les organes du véhicule vont se refroidir plus vite.

La condition C3 est vérifiée si une temporisation est en cours, déclenchée suite à l'arrêt de la demande de refroidissement D_{ref}, lorsque D_{ref} vaut 0 et que la valeur précédente était de 1. La temporisation peut être élaborée par une cartographie de valeurs de temporisation en fonction de la température Tₑₓₜ à l'extérieur du véhicule. Plus la température du liquide de refroidissement est élevée, plus la temporisation est longue. Dès qu'une mise en veille est détectée, lorsque le signal passe à 1, la temporisation est envoyée à un bloc compteur décroissant.

Le bloc de sortie C6 est obtenu à partir du bloc porte logique C5 qui est une porte logique OU. Le refroidissement est ainsi validé dés que le refroidissement du véhicule est demandé (en mode roulage ou mode recharge), ou que le signal d'interdiction de mise en veille est VRAI.

## Revendications

1. Dispositif de refroidissement (1) pour véhicule automobile du type électrique, le dispositif de refroidissement (1) pouvant être sous tension ou hors tension et comprenant un circuit de refroidissement apte à refroidir un ensemble moteur (5) comprenant un système électronique de pilotage (12) à l'aide d'un liquide de refroidissement, le circuit de refroidissement étant commandé par un système de commande (9) compris dans le dispositif de refroidissement et apte à maintenir le dispositif (1) sous tension lorsque le véhicule est en fin de mission et que la température du liquide de refroidissement est supérieure à une température seuil,
le véhicule électrique comprenant un ensemble chargeur (4) de batterie, le circuit de refroidissement étant apte à refroidir l'ensemble chargeur (4) et l'ensemble moteur (5), **caractérisé en ce que** le dispositif (1) comprend une première pompe (2) apte à alimenter sélectivement en liquide de refroidissement l'ensemble moteur (5) et une deuxième pompe (3) apte à alimenter sélectivement en liquide de refroidissement l'ensemble chargeur (4).

2. Dispositif (1) selon la revendication 1, **caractérisé en ce qu'**il comprend une première vanne (7) apte à empêcher un passage de liquide de refroidissement dans l'ensemble chargeur (4) et une deuxième vanne (8) apte à empêcher un passage de liquide de refroidissement dans l'ensemble moteur (5)

3. Dispositif (2) selon la revendication 2, **caractérisé en ce qu'**il comprend une restriction hydraulique (10) permettant de maintenir un débit minimum de liquide de refroidissement dans l'ensemble moteur (5).

4. Dispositif (1) selon l'une des revendications 1 à 3, **caractérisé en ce que** le système de commande (9) est apte à asservir le débit de chaque pompe (2,3) dans un système de régulation en boucle fermée en fonction de la température du liquide de refroidissement et d'une température de consigne.

5. Dispositif (1) selon l'une des revendications 1 à 4, **caractérisé en ce que** le système de commande (9) est apte à stopper le maintien du dispositif (1) sous tension si la tension de la batterie est inférieure à une valeur de consigne.

6. Dispositif (1) selon l'une des revendications 1 à 5, **caractérisé en ce que** le système de commande (9) est apte à stopper le maintien du dispositif (1) sous tension si le temps écoulé depuis la fin de mission du véhicule dépasse un intervalle de temps prédéterminé.

7. Dispositif (1) selon la revendication 6, **caractérisé en ce que** l'intervalle de temps prédéterminé est fonction de la température à l'extérieur du véhicule.

## Patentansprüche

1. Kühlvorrichtung (1) für ein Kraftfahrzeug des elektrischen Typs, wobei die Kühlvorrichtung (1) unter Spannung oder spannungsfrei sein kann und einen Kühlkreislauf aufweist, der geeignet ist, um eine Motorbaugruppe (5) zu kühlen, die ein elektronisches System (12) zum Steuern mit Hilfe eines Kühlmittels aufweist, wobei der Kühlkreislauf von einem Steuersystem (9) gesteuert ist, das in der Kühlvorrichtung enthalten und geeignet ist, um die Vorrichtung (1) unter Spannung zu halten, wenn das Fahrzeug am Missionsende ist und die Temperatur des Kühlmittels größer ist als eine Schwellentemperatur,
wobei das Elektrofahrzeug eine Batterieaufladeeinheit (4) aufweist, wobei der Kühlkreislauf geeignet ist, um die Aufladeeinheit (4) und die Motorbaugruppe (5) zu kühlen, **dadurch gekennzeichnet, dass** die Vorrichtung (1) eine erste Pumpe (2) aufweist, die geeignet ist, um die Motorbaugruppe (5) selektiv mit Kühlflüssigkeit zu versorgen, und eine zweite Pumpe (3), die geeignet ist, um die Aufladeeinheit (4) selektiv mit Kühlflüssigkeit zu versorgen.

2. Vorrichtung (1) nach Anspruch 1, **dadurch gekennzeichnet, dass** sie ein erstes Ventil (7) aufweist, das geeignet ist, um eine Passage von Kühlflüssigkeit in die Aufladeeinheit (4) zu verhindern, und ein zweites Ventil (8), das geeignet ist, um eine Passage von Kühlflüssigkeit in die Motorbaugruppe (5) zu verhindern.

3. Vorrichtung (1) nach Anspruch 2, **dadurch gekennzeichnet, dass** sie eine hydraulische Drossel (10) aufweist, die es erlaubt, einen Mindestdurchfluss an Kühlflüssigkeit in der Motorbaugruppe (5) aufrechtzuerhalten.

4. Vorrichtung (1) nach einem der Ansprüche 1 bis 3, **dadurch gekennzeichnet, dass** das Steuersystem (9) geeignet ist, um den Durchfluss jeder Pumpe (2, 3) in einem Regelsystem in geschlossener Schleife in Abhängigkeit von der Temperatur der Kühlflüssigkeit und einer Solltemperatur zu steuern.

5. Vorrichtung (1) nach einem der Ansprüche 1 bis 4, **dadurch gekennzeichnet, dass** das Steuersystem (9) geeignet ist, um das Unterspannunghalten der Vorrichtung (1) zu stoppen, wenn die Spannung der Batterie niedriger ist als ein Sollwert.

6. Vorrichtung (1) nach einem der Ansprüche 1 bis 5, **dadurch gekennzeichnet, dass** das Steuersystem (9) geeignet ist, um das Unterspannunghalten der Vorrichtung (1) zu stoppen, wenn die seit dem Missionsende des Fahrzeugs verstrichene Zeit eine vorbestimmte Zeitspanne überschreitet.

7. Vorrichtung (1) nach Anspruch 6, **dadurch gekennzeichnet, dass** das vorbestimmte Zeitintervall von der Temperatur außerhalb des Fahrzeugs abhängt.

## Claims

1. Cooling device (1) for an electric type automotive vehicle, the cooling device (1) being able to be powered up or powered down and comprising a cooling circuit capable of cooling an engine assembly (5) comprising an electronic driver system (12) using a coolant, the cooling circuit being controlled by a control system (9) which is included in the cooling device and, is capable of keeping the device (1) powered up when the vehicle is at end of mission and the temperature of the coolant is above a threshold temperature,
the electric vehicle including a battery charger assembly (4), the cooling circuit being capable of cooling the charger assembly (4) and the engine assembly (5), **characterized in that** the device (1) includes a first pump (2) capable of selectively supplying coolant to the engine assembly (5) and a second pump (3) capable of selectively supplying coolant to the charger assembly (4).

2. Device (1) according to Claim 1, **characterized in that** it includes a first valve (7) capable of preventing a flow of coolant in the charger assembly (4) and a second valve (8) capable of preventing a flow of coolant in the engine assembly (5).

3. Device (1) according to Claim 2, **characterized in that** it includes a hydraulic restriction (10) that makes it possible to maintain a minimum flow rate of coolant in the engine assembly (5).

4. Device (1) according to one of Claims 1 to 3, **characterized in that** the control system (9) is capable of servo-controlling the flow rate of each pump (2, 3) in a closed-loop regulation system according to the temperature of the coolant and a setpoint temperature.

5. Device (1) according to one of Claims 1 to 4, **characterized in that** the control system (9) is capable of stopping the device (1) being kept powered up if the battery voltage is below a setpoint value.

6. Device (1) according to one of Claims 1 to 5, **characterized in that** the control system (9) is capable of stopping the device (1) being kept powered up if the time elapsed since the end of mission of the vehicle exceeds a predetermined time interval.

7. Device (1) according to Claim 6, **characterized in that** the predetermined time interval is determined on the temperature outside the vehicle.
